# EUROPÄISCHE PATENTSCHRIFT

(11) **EP 2 735 928 B1**
(45) Veröffentlichungstag und Bekanntmachung des Hinweises auf die Patenterteilung: **22.08.2018**
(21) Anmeldenummer: 12007853.0
(22) Anmeldetag: 21.11.2012
(51) Int. Cl.: G05B 19/404

(54) **Verfahren zur Einjustierung einer werkstücktragenden Baugruppe eines Bearbeitungszentrums für die spanende Werkstückbearbeitung**
Method for adjusting a workpiece-supporting assembly of a machining centre for workpiece machining
Procédé d'ajustage d'un module porteur d'une pièce à usiner d'un centre de traitement pour le traitement de la pièce à usiner sous tension

(43) Veröffentlichungstag der Anmeldung: 28.05.2014
(73) Patentinhaber: Maschinenfabrik Berthold Hermle AG, 78559 Gosheim (DE)
(72) Erfinder: Bernhard, Franz-Xaver, 78549 Spaichingen (DE); Müller, Reiner, M. Sc. Dipl.-Ing. (FH), 72364 Obernheim (DE); Bauser, Andreas, M. Sc. Dipl.-Ing. (FH), 78559 Gosheim (DE); Bacher, Kai, Dipl.-Ing. (BA), 78647 Trossingen (DE)
(74) Vertreter: Hoefer & Partner Patentanwälte mbB

(56) Entgegenhaltungen:
- EP-A1- 1 978 409
- EP-A2- 1 300 738
- DE-A1- 10 139 931
- US-A1- 2004 254 673

## Beschreibung

Die Erfindung betrifft ein Verfahren zur Einjustierung einer werkstücktragenden Baugruppe eines Bearbeitungszentrums für die spanende Werkstückbearbeitung, insbesondere ein multifunktionales Bearbeitungszentrum für die spanende Fräs-Bohr und/oder Drehbearbeitung.

Bei Maschinen der eingangs genannten Gattung können aufgrund unterschiedlicher Werkstückbeladungen Abweichungen in der Maschinengeometrie des Bearbeitungszentrums auftreten. Diese Geometrieabweichungen können die Bearbeitungsgenauigkeit beim Fräsen, Bohren und Drehen vermindern. Insbesondere bei einem schwenk- und drehbaren Werkstücktisch mit großer Stützweite des Brückenträgers und schwerer Werkstückbeladung können je nach Schwenk- und Drehposition bauartbedingte Durchbiegungen bzw. Verformungen im Hundertstelmillimeter Bereich auftreten. Die üblicherweise heutzutage geforderte Bearbeitungsgenauigkeit im Werkzeugmaschinenbau bei Bearbeitungszentren liegt aber im Tausendstelmillimeter Bereich, so dass diese bauartbedingten Durchbiegungen bzw. Verformungen nicht mehr akzeptiert werden können.

Speziell bei einer Mehrseitenwerkstückbearbeitung können sich beim Umschlag eines schwenk- und drehbaren Werkstücktisches von der horizontalen 0°-Stellung (A-Achse 0°) auf die vertikale 90°-Stellung (A-Achse 90°) oder umgekehrt die bauartbedingten Durchbiegungen bzw. Verformungen im Tischbereich sehr negativ auf die Genauigkeit des Bearbeitungsergebnis auswirken (z. B. ein rechter Winkel am Werkstück kann nicht mehr mit ausreichender Genauigkeit eingehalten werden).

Es besteht daher ein Bedarf, Verformungen im Tischbereich aufgrund der unterschiedlichen Werkstückbeladung einjustieren zu können, ohne dass dabei die Bauart bzw. die Konstruktion des Werkstücktisches bzw. der werkzeugtragenden Baugruppe konstruktiv verändert werden muss.

In der EP 2 495 069 A1 ist eine Werkzeugmaschine beschrieben, bei der die schwerkraftbedingten werkstückabhängigen elastischen Bauteilverformungen an einer einachsig linear verfahrbaren werkstücktragenden Baugruppe mit Hilfe eines Piezoaktors einjustiert werden. Mit Hilfe dieses Piezoaktors können auch Winkelfehler am Werkstück einjustiert werden. Der Piezoaktor kann statische und/oder auch dynamische Korrekturen vornehmen.

Zum Einjustieren von Geometriefehlern an einer werkstücktragenden Baugruppe wird bei der EP 2 495 069 A1 ein zusätzliches Bauteil, nämlich ein Piezoaktor benötigt. Dies erfordert einen zusätzlichen Aufwand hinsichtlich Einbau und Signalansteuerung des Aktors. Eine nachträgliche Aufrüstung einer schon bestehenden werkstücktragenden Baugruppe ist mit diesem System nicht ohne weiteres möglich und wenn doch, dann nur mit sehr großem Aufwand. Außerdem ist die in der EP 2 495 069 A1 offenbarte Lösung nur an einem einachsig linear verfahrbaren Konsolenwerkstücktisch sinnvoll anwendbar. Somit ist der Anwendungsbereich der EP 2 495 069 A1 stark eingegrenzt. Ein Verfahren für die Ermittlung der Korrekturwerte bei unterschiedlicher Werkstückbeladung vor und während des Betriebs der Maschine ist in der EP 2 495 069 A1 außerdem nicht beschrieben bzw. offenbart.

Die DE 10139931 A1 offenbart ein Verfahren zur Einjustierung einer werkstücktragenden Baugruppe eines Bearbeitungszentrums für die spanende Werkstückbearbeitung, wobei ein Verformungsmodell, welches die physikalischen Gegebenheiten der werkstücktragenden Baugruppe des Bearbeitungszentrums beschreibt, auf Basis von Verformungsmessungen justiert wird und dann in der Maschinensteuerung des Bearbeitungszentrums als nicht veränderbares Rechenmodell fest implementiert wird, und wobei mit dem implementierten Rechenmodell eine oder mehrere Positionskorrekturwerte für die Maschinensteuerung des Bearbeitungszentrums berechnet werden, mit denen dann die Maschinensteuerung eine entsprechende Positionskorrektur von den berechneten elastischen Bauteilverformungen an der werkstücktragenden Baugruppe automatisch durchführen kann, so dass die elastische Verformung der werkstücktragenden Baugruppe in beliebiger Baumrichtung ohne Zuhilfenahme einer externen Messeinrichtung nur über die Maschinensteuerung ermittelt und auch einjustiert wird.

Die EP 1 300 738 A2 offenbart die Verwendung eines 3D-FEM-Modells zur Berechnung von Korrekturwerten.

Ausgehend von dem in der EP 2 495 069 A1 beschriebenen Stand der Technik liegt der vorliegenden Erfindung die Aufgabe zu Grunde, ein Verfahren zu schaffen, mit welchem schwerkraftbedingte und werkstückabhängige elastische Bauteilverformungen an einem schwenk- und drehbaren Werkstücktisch einfach bestimmt und einfach einjustiert werden können, ohne dass dabei eine zusätzliche externe Mess- und Stelleinrichtung notwendig ist. Bei einem schwenkbaren und drehbaren Werkstücktisch besteht die besondere Schwierigkeit noch darin, dass sowohl die winkelmäßigen wie auch die linearen Abweichungen ausgeglichen werden müssen.

Diese Aufgabe wird erfindungsgemäß gelöst durch ein Verfahren zur Einjustierung einer werkstücktragenden Baugruppe eines Bearbeitungszentrums für die spanende Werkstückbearbeitung, insbesondere ein multifunktionales Bearbeitungszentrum für die spanende Fräs-Bohr und/oder Drehbearbeitung, mit drei linearen Maschinenachsen und mit zwei rotativen Maschinenachsen, wobei die drei linearen Maschinenachsen entsprechend dem kartesischen Koordinatensystem ausgerichtet sind und wobei die werkstücktragende Baugruppe als schwenk- und drehbarer Werkstücktisch mit horizontal ausgerichteter Schwenkachse und mit einer normal zur Schwenkachse ausgerichteten Drehachse ausgebildet ist und wobei der Werkstücktisch über die Maschinensteuerung des Bearbeitungszentrums simultan um die Schwenk- und Drehachse über elektrische Servomotoren gesteuert verstellbar ist, bei dem ein über mehrere variierende steifigkeitsrelevante Eingangsgrößen justierbares Verformungsmodell, das als verformungsfähiges geometrisches System zu verstehen ist. welches die physikalischen Gegebenheiten und das komplette Verformungsverhalten der werkstücktragenden Baugruppe des Bearbeitungszentrums mit genügend großer Genauigkeit vollständig beschreibt, auf Basis von Verformungsmessungen justiert wird und dann in der Maschinensteuerung des Bearbeitungszentrums als nicht veränderbares Rechenmodell fest implementiert wird, das als mathematisches System zu verstehen ist, welches das Verhalten des Verformungsmodells gegenüber dem theoretischen Verhalten des idealen nicht verformten Bauteils beschreibt, so dass bezogen auf den jeweiligen Schwenk- und Drehwinkel der werkstücktragenden Baugruppe auf analytische oder numerische Weise einen Zusammenhang zwischen Werkstückmasse, Werkstückschwerpunkt und elastischer Bauteilverformung herstellt und dass mit dem implementierten Rechenmodell in Verbindung mit den in die Maschinensteuerung übertragenen Parametern für die Werkstückmasse und für den Werkstückschwerpunkt des beladenen Werkstücks eine oder mehrere Positionskorrekturwerte für die Maschinensteuerung des Bearbeitungszentrums berechnet werden, mit denen dann die Maschinensteuerung eine entsprechende Positionskorrektur von den berechneten elastischen Bauteilverformungen an der werkstücktragenden Baugruppe automatisch durchführt, so dass die elastische Verformung der werkstücktragenden Baugruppe in beliebiger Raumrichtung ohne Zuhilfenahme einer externen Messeinrichtung nur über die Maschinensteuerung ermittelt und auch einjustiert wird, wobei das Verformungsmodell bei der Erstinbetriebnahme der werkstücktragenden Baugruppe als Basis von Verformungsmessungen lediglich einmalig justiert wird, so dass das Verformungsmodell für alle werkstücktragenden Baugruppen mit identisch gleichen geometrischen Abmessungen und mit identisch gleichen geometrischen Anbindungen an das Maschinenbett Gültigkeit besitzt.

Unter dem Begriff "Modell" ist ganz allgemein ein System zu verstehen, das als Repräsentant eines Originals geschaffen wurde. Ein Modell hat im Wesentlichen die gleichen Eigenschaften und Aufgaben wie das Original und soll die Beschreibung des Originals ermöglichen und dieses somit komplett ersetzen. Einem Modell liegt vorzugsweise eine Gleichung oder ein System von Gleichungen zu Grunde, die aus zumindest einem physikalischen Gesetz hergeleitet sind, das einen bestimmten physikalischen Prozess beschreibt. Das Modell kann insbesondere ein Algorithmus sein, der ein numerisches Vorgehen zur Auswertung von Gleichungen vorgibt.

Unter dem Begriff "justierbares Verformungsmodell" ist ganz allgemein ein verformungsfähiges geometrisches System zu verstehen, das mit Hilfe von gemessenen Hilfsgrößen, die am realen Bauteil durch Belastungsversuche (Verformungsmessungen am Werkstücktisch zur Ermittlung der steifigkeitsrelevanten Eingangsgrößen) ermittelt wurden, die werkstücktragende Baugruppe in seinem kompletten Verformungsverhalten vollständig beschreiben kann.

Unter dem Begriff "Rechenmodell" ist ganz allgemein ein mathematisches System zu verstehen, dass das Verhalten des Verformungsmodells gegenüber dem theoretischen Verhalten des idealen nicht verformten Bauteilmodells (werkstücktragende Baugruppe ohne Verformung) beschreibt und somit eine quantitative Aussage über tatsächlich auftretende Bauteilverformungen an der werkstücktragenden Baugruppe ermöglicht.

Der Kern der Erfindung liegt darin, dass mit einem speziell auf den schwenk-und drehbaren Werkstücktisch über Verformungsmessungen justierbares Verformungsmodell ein Rechenmodell erstellt werden kann, mit dem dann auf analytische oder numerische Weise ein Zusammenhang zwischen Werkstückmasse, Werkstückschwerpunkt und elastischer Bauteilverformung hergestellt werden kann, um dann mit Hilfe der in die Maschinensteuerung übertragenen Parameter für die Werkstückmasse und für den Werkstückschwerpunkt des beladenen Werkstücks die tatsächlich vorhandenen elastischen Bauteilverformungen des Werkstücktisches berechnen zu können, wobei alle möglichen Verformungsarten, wie zum Beispiel Biegung, Torsion, Druck und Zug und Kombinationen davon berücksichtigt werden. Die so ermittelte Bauteilverformung kann dann mit einfachen Mitteln über die Maschinensteuerung des Bearbeitungszentrums entsprechend ausgeglichen werden. Dabei können sowohl die winkelgemäßen Abweichungen des Werkstücktisches um die rotativen Raumachsen (A-C-Achse) über entsprechende Korrekturbewegungen der Schwenk-und/oder Drehachse, als auch die linearen Abweichungen des Werkstücktisches um die linearen Raumachsen (X-Y-Z-Achse) über entsprechende Korrekturbewegungen der vertikalen Hochachse und/oder der horizontalen Längsachse und/oder der horizontalen Querachse ausgeglichen werden.

Vereinfacht ausgedrückt wird ein auf den jeweiligen eingebauten Werkstücktisch justierbares Verformungsmodell in ein Rechenmodell abgeleitet um dann in die Maschinensteuerung implementiert zu werden. Die dann über das Rechenmodell ermittelbaren Bauteilabweichungen bzw. Bauteilverformungen können dann über eine mehrachsige Ausgleichsbewegung der werkzeugtragenden und der werkstücktragenden Baugruppe ausgeglichen bzw. korrigiert werden. Diese Kombination von einstellbarem Verformungsmodell und dem daraus abgeleiteten Rechenmodell in Verbindung mit einer mehrachsigen Ausgleichsbewegung von linearen und rotativen NC-Achsen ist ein wesentlicher Aspekt der vorliegenden Erfindung.

Die für die Ermittlung der Bauteilverformungen notwendigen Parameter, wie Werkstückmasse und Werkstückschwerpunkt, können dabei über einen speziellen Messzyklus mit einfachen Mitteln über den Motorstrom der betreffenden Achsantriebsmotoren bestimmt und dann in das Rechenmodell weitergeleitet werden. Eine händische Ermittlung des Werkstückgewichtes und des Werkstückschwerpunktes aufgrund von manuell durchgeführten Berechnungen und Messungen ist ebenfalls möglich. In diesem Fall müssen die Werkstückkennwerte über die Eingabeeinheit der Maschinensteuerung manuell eingelesen und dann von der Maschinensteuerung an das Rechenmodell weitergeleitet werden.

Mit dem erfindungsgemäßen Verfahren lässt sich ohne zusätzliche externe Mess- und Stellmittel in einfacher Weise eine Ermittlung von geometrischen Positionsabweichungen mit nachfolgender Korrektur realisieren. Insbesondere können geometrische Positionsabweichungen, die ihre Ursache in den stark unterschiedlichen Werkstückbeladungen haben, in einfacher Weise ermittelt und dann mit einfachen Mitteln korrigiert werden.

Erfindungsgemäß kann über das vom Verformungsmodell abgeleitete Rechenmodell in Verbindung mit dem Werkstückgewicht und dem Werkstückschwerpunkt des beladenen Werkstücks die Verformung eines schwenk- und drehbaren Werkstücktisches mit genügend hoher Genauigkeit beschrieben werden.

Das vom Verformungsmodell abgeleitete Rechenmodell ist ein Modell n-ter Ordnung, mit dem der Großteil der Verformungen am schwenk- und drehbaren Werkstücktisch rechnerisch beschrieben werden kann. Außerdem können die rechnerisch ermittelte Bauteilverformung durch Verfahren der linearen und rotativen Maschinenachsen vollständig in allen relevanten Achsfreiheitsgraden ausgeglichen werden.

Ein weiterer Vorteil der Erfindung ist darin zu sehen, dass die für das vom Verformungsmodell abgeleitete Rechenmodell zur Ermittlung der Bauteilverformung notwendigen relevanten Parameter, wie Werkstückmasse und Werkstückschwerpunkt, über einen automatisch ablaufenden Mess- und Berechnungszyklus ermittelt werden können, ohne dass eine händische Eingabe und eine händische Berechnung und Messung notwendig wird.

Vorteilhafte Weiterbildungen ergeben sich aus den Unteransprüchen.

Gemäß einer bevorzugten Weiterbildung kann eine Positionskorrektur während der Bearbeitung durchgeführt werden. Dies hat den besonderen Vorteil, dass die Bauteilverformung auch während einer interpolierenden Tisch- bzw. Werkstückbewegung ermittelt und ausgeglichen werden kann. Bei einer interpolierenden Bewegung werden mehrere Achsen gleichzeitig, d. h. simultan bewegt. Eine interpolierende Bewegung der Achsen ist dann wichtig und notwendig, wenn komplexe dreidimensionale Freiformflächen bearbeitet werden müssen. Somit wird es erstmalig möglich, auch während einer komplexen Bearbeitungsaufgabe einen Ausgleich von Verformungsfehlern durchzuführen.

Vorteilhafterweise werden die variierenden steifigkeitsrelevanten Eingangsgrößen des Verformungsmodells mit Hilfe von geeichten Werkstücken über einen Eichzyklus ermittelt, bei dem die unterschiedlichen geometrischen Verlagerungen von vordefinierten Messpunkten an der werkstücktragenden Baugruppe unter unterschiedlichen Schwenkwinkeln bei geeichter Werkstückbeladung messtechnisch erfasst werden, um dann in steifigkeitsrelevante Eingangsgrößen umgerechnet werden zu können, die dann als Grundlage für die Einstellung des Verformungsmodells dienen und einen analytischen oder numerischen Zusammenhang zwischen Werkstückmasse, Werkstückschwerpunkt und elastischer Bauteilverformung ermöglichen.

Gemäß einer bevorzugten Ausgestaltung werden die Werkstückmasse und der Werkstückschwerpunkt des beladenen Werkstücks über einen in der Maschinensteuerung implementierten und automatisch ablaufenden Mess- und Berechnungszyklus vor oder während des Bearbeitungsprozesses erfasst und dann als Werkstückparameter in das Rechenmodell weitergeleitet.

Gemäß einer vorteilhaften Weiterbildung erfasst der Messzyklus für die Bestimmung der Werkstückmasse und des Werkstückschwerpunkts den Motorstrom des Servomotors für die Schwenk- und/oder die Drehachse bei beladener werkstücktragender Baugruppe in verschiedenen schwerkraftbelasteten Schwenkhaltepositionen, insbesondere vor Bearbeitungsbeginn einer Fräs- und Bohrbearbeitung.

Vorteilhafterweise wird der Motorstrom in mindestens drei verschiedenen schwerkraftbelasteten Schwenkhaltepositionen ermittelt.

Gemäß einer bevorzugten Ausgestaltung beinhalten die mindestens drei verschieden schwerkraftbelasteten Schwenkhaltepositionen genau definierte und fest eingestellte Schwenk- und Drehwinkel der werkstücktragenden Baugruppe.

Durch die gemessenen Stromwerte wird gemäß einer vorteilhaften Weiterbildung mit Hilfe eines Berechnungszyklus ein numerischer Zusammenhang zwischen Motorstrom, Werkstückmasse und Werkstückschwerpunkt hergestellt.

Der Berechnungszyklus besteht vorteilhafterweise aus einem Berechnungsalgorithmus, der über linear unabhängige Gleichungen die unbekannten Größen Werkstückmasse und Werkstückschwerpunkt über die gemessenen Motorströme ermitteln kann.

Als Grundlage für das Verformungsmodell dient gemäß einer bevorzugten Ausgestaltung ein 3D-FEM-(Finite-Elemente-Methode)-Modell der werkstücktragenden Baugruppe.

Mit Verwendung einer FEM-(Finite-Elemente-Methode)-Analyse kann gemäß einer bevorzugten Weiterbildung die Abhängigkeit zwischen Werkstücklage, Werkstückgewicht und Werkstückschwerpunkt numerisch über das Verformungsmodell dargestellt werden, um dann daraus mit Hilfe des in der Maschinensteuerung implementierten Rechenmodells die tatsächlich auftretende elastische Verformung zu berechnen, die dann an die Maschinensteuerung als Korrekturwert ausgegeben werden kann.

Das Rechenmodell kann den Korrekturwert vorteilhafterweise entsprechend der Schwenk- und Drehwinkelposition der werkstücktragenden Baugruppe stetig an die veränderten Belastungsverhältnisse anpassen.

Weitere Einzelheiten, Merkmale und Vorteile der Erfindung ergeben sich aus der nachfolgenden Beschreibung anhand der Zeichnungen. Es zeigen:
- Figur 1: ein Bearbeitungszentrum mit einem schwenk- und drehbaren Werkstücktisch und einer in drei linearen Raumrichtungen verfahrbaren werkzeugtragenden Baugruppe,
- Figur 2: das Verformungsverhalten des schwenk- und drehbaren Werkstücktisches in einer 90° Schwenkstellung, und
- Figur 3: Einrichtungen für die Verformungsmessung der steifigkeitsrelevanten Eingangsgrößen bei der Erstinbetriebnahme eines Werkstücktisches zum Justieren des Verformungsmodells.

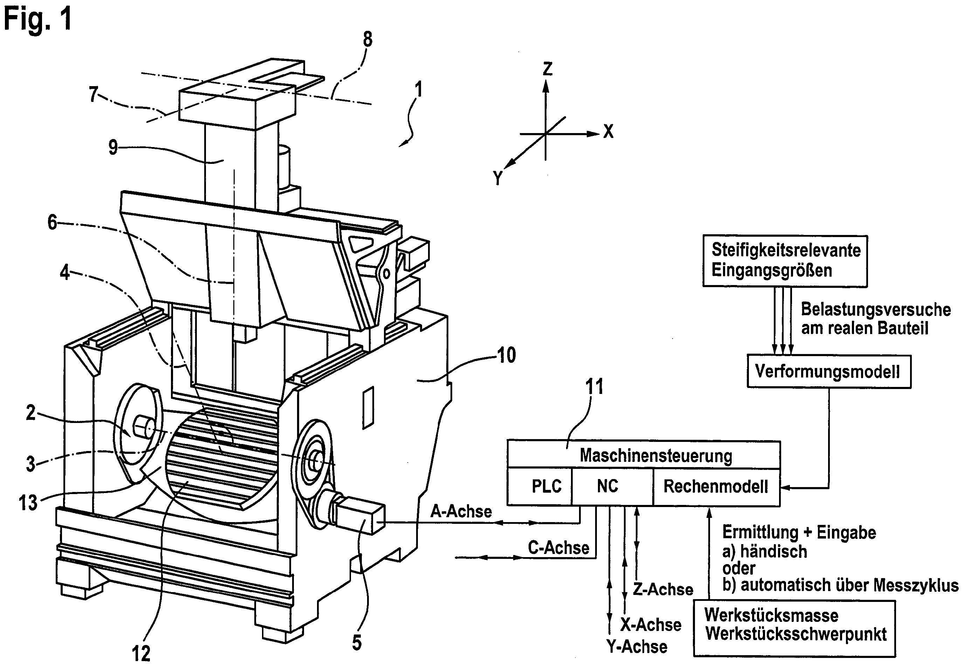

In Figur 1 ist ein Bearbeitungszentrum 1 zum Fräsen, Drehen und Bohren gezeigt.

Das Bearbeitungszentrum 1 weist ein U-förmiges stationäres Maschinenbett 10 mit zwei Seitenwandungen auf. An dem Maschinenbett 10 ist ein schwenkbarer Brückenträger 13 gelagert, der eine werkstücktragende Baugruppe 2 trägt, die als schwenk-und drehbarer Werkstücktisch 12 ausgebildet ist. Auf den Werkstücktisch 12 kann ein Werkstück 14 aufgespannt werden.

Der Brückenträger 13 ist mittels eines elektrischen Servomotors 5 um eine horizontale Schwenkachse 3 (A-Achse) verschwenkbar, und der Werkstücktisch 4 ist um eine Drehachse 4 (C-Achse) drehbar.

Auf den Seitenwandungen ist eine werkzeugtragende Baugruppe 9 mit einer Werkzeugspindel derart gelagert, dass die werkzeugtragende Baugruppe 9 mit der Werkzeugspindel in Richtung einer vertikalen Hochachse 6 (Z-Achse), einer horizontalen Längsachse 7 (Y-Achse) und einer horizontalen Querachse 8 (X-Achse) verfahren werden kann.

Das Bearbeitungszentrum 1 ist mit einer Maschinensteuerung 11 mit NC, PLC und einem vom Verformungsmodell abgeleiteten Rechenmodell versehen.

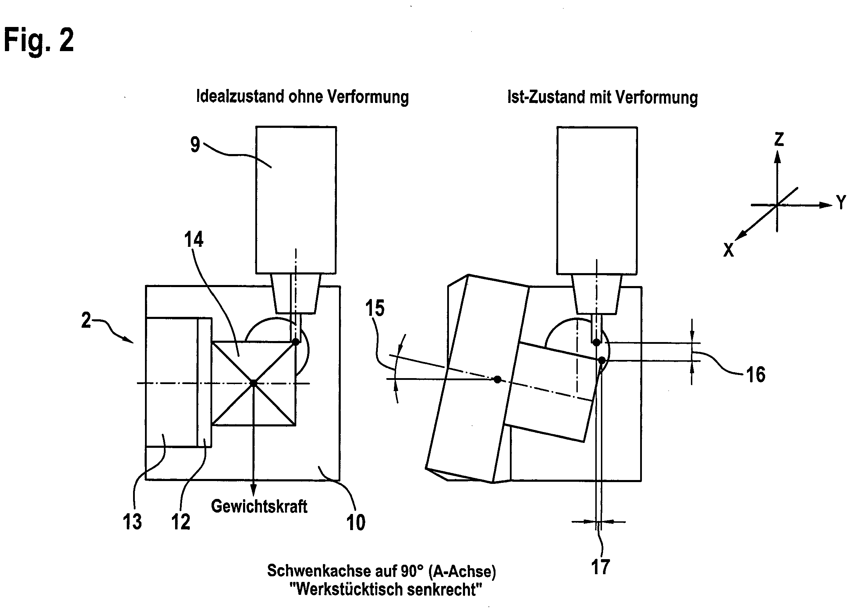

In Figur 2 ist das typische Verformungsverhalten einer gattungsbildenden werkstücktragenden Baugruppe (schwenk- und drehbarer Werkstücktisch) unter einer Werkstückbeladung dargestellt, wobei der Werkstücktisch in der vertikalen 90°-Stellung (A-Achse 90°) dargestellt ist. Durch die Gewichtskraft des zu bearbeitenden Werkstückes 14 kommt es zu einer winkelgemäßen Abweichung 15 (geometrische Verlagerung) um eine zur horizontalen Schwenkachse 3 (A-Achse) parallelen Achse, zu einer linearen Abweichung 16 (geometrische Verlagerung) in der vertikalen Hochachse (Z-Achse) und zu einer linearen Abweichung 17 (geometrische Verlagerung) in der horizontalen Längsachse (Y-Achse).

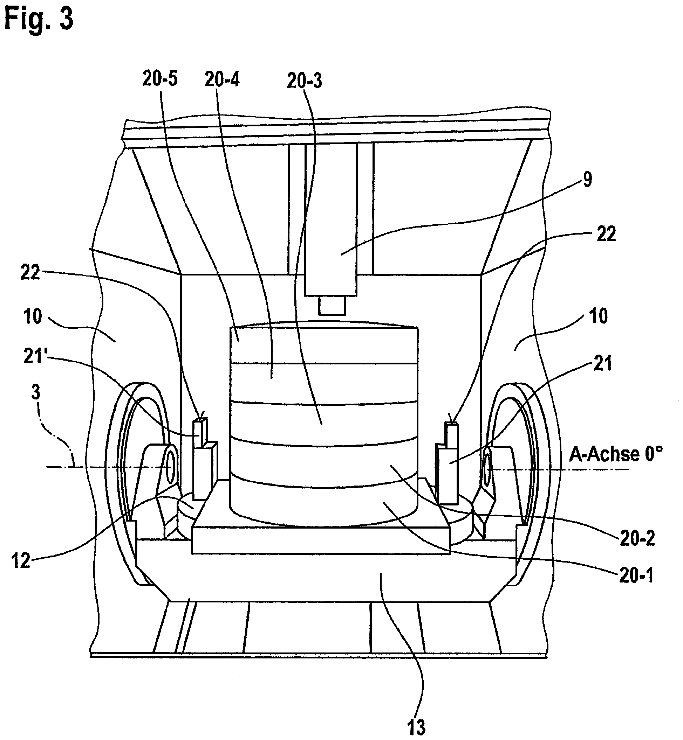

In Figur 3 sind Einrichtungen für das Justieren des Verformungsmodells der werkstücktragenden Baugruppe 2 dargestellt. Für das Justieren des Verformungsmodells werden mehrere Eichwerkstücke (Eichgewichte) 20-1 bis 20-5 und zwei kalibrierte Endmaße 21, 21' mit jeweils einer Antastfläche 22 für die messtechnische Ermittlung der geometrischen Verlagerung des Werkstücktisches 12 unter geeichter Last benötigt. Dabei werden über die Antastflächen 22 durch eine Antastvorrichtung des Bearbeitungszentrums 1 oder durch eine externe Antastvorrichtung die geometrischen Verlagerungen des Werkstücktisches 12 in allen Raumachsen (X, Y Z und A, C) gemessen und dann in steifigkeitsrelevante Eingangsgrößen umgerechnet, die dann dem Verformungsmodell als Grundlage für den Zusammenhang zwischen Werkstückmasse, Werkstückschwerpunkt und elastischer Bauteilverformung dienen.

Über die steifigkeitsrelevanten Eingangsgrößen kann das Verformungsmodell des dreh- und schwenkbaren Werkstücktisches 12 vollständig justiert werden, und zwar für alle möglichen Achspositionen des schwenk- und drehbaren Werkstücktisches 12. Der Eichvorgang für die Ermittlung der steifigkeitsrelevanten Parameter läuft dabei folgendermaßen ab:
Beim Eichen wird zuerst ein erstes Eichgewicht 20-1 auf den Werkstücktisch 12 aufgespannt und dann wird in der 0° und in der 90° Schwenkposition (A-Achse in 0° und in 90°) des Werkstücktisches 12 die geometrische Verlagerung des Werkstücktisches 12 an definierten Messpunkten über eine Messeinrichtung ermittelt. Im dargestellten Ausführungsbeispiel werden diese definierten Messpunkte durch zwei kalibrierte Endmaße 21, 21' mit jeweils einer Antastfläche 22 realisiert. Als Messeinrichtung für die messtechnische Ermittlung der geometrischen Verlagerung des Werkstücktisches 12 wird dabei eine Antastvorrichtung verwendet, die als berührend wirkender Messtaster ausgeführt ist und die sich in der Werkzeugspindel des Bearbeitungszentrums 1 befindet. In diesem Fall wird das Bearbeitungszentrum 1 wie eine Koordinaten-Messmaschine verwendet. Somit können die Tischverlagerung (Bauteilverformungen) sehr genau und sicher gemessen und auf die Maschinenachsen bezogen werden.

Dieser Eichvorgang wird mit weiteren Eichgewichten 20-2 bis 20-5 wiederholt. Im vorliegenden Ausführungsbeispiel werden beispielsweise insgesamt fünf Eichvorgänge durchgeführt. Das heißt, auf das erste Eichgewicht 20-1 wird ein zweites Eichgewicht 20-2 aufgelegt und die Verformungsmessung wird in der 0° und in der 90° Schwenkposition wiederholt. In der 0° Schwenkposition werden dabei mindestens drei Verformungsmessungen mit unterschiedlicher Schwerpunktlage der Eichgewichte 20 in Bezug auf die C-Achse durchgeführt, d. h. in der 0° Schwenkposition muss nicht nur die Masse der Eichgewichte 20 variiert werden, sondern auch noch die Schwerpunktlage der Eichgewichte in Bezug auf die C-Achse.

Dieser Vorgang wird im vorliegenden Ausführungsbeispiel solange wiederholt, bis insgesamt fünf Eichgewichte 20-1 bis 20-5 auf dem Werkstücktisch 12 aufgelegt und die entsprechenden Bauteilverformungen gemessen sind. Aus den so ermittelten Verformungswerten und den bekannten Werkstückmassen und Werkstückschwerpunkten werden dann die steifigkeitsrelevanten Eingangsgrößen ermittelt und als Randbedingungen in das Verformungsmodell eingegeben, wobei das Verfahren zur Ermittlung der steifigkeitsrelevanten Eingangsgrößen einen Verfahrensschritt gemäß dem Verfahren der kleinsten Fehlerquadrate (Least-Square-Methode-Approximation) aufweist.

Mit dem jetzt justierten Verformungsmodell kann ein Zusammenhang zwischen Werkstückmasse, Werkstückschwerpunkt und elastischer Bauteilverformung in Bezug auf den schwenk- und drehbaren Werkstücktisch 12 hergestellt werden. Aus dem justierten Verformungsmodell kann nun das Rechenmodell für die Implementierung in die Maschinensteuerung abgeleitet werden.

Das Verformungsmodell muss in der Regel nur bei der Erstinbetriebnahme des Werkstücktisches 12 einmalig justiert werden, so dass das Verformungsmodell für alle Werkstücktische 12 mit identisch gleichen geometrischen Abmessungen und mit identisch gleichen geometrischen Anbindungen an das Maschinenbett des Bearbeitungszentrums 1 Gültigkeit besitzt.

Nachfolgend wird der automatische Messzyklus für die Werkstückerkennung (Werkstückmasse und Werkstückschwerpunkt) beschrieben:
Vor Beginn einer Werkstückbearbeitung wird über einen automatisch ablaufenden Mess- und Berechnungszyklus die Werkstückmasse und der Werkstückschwerpunkt des zu bearbeitenden Werkstücks 14 ermittelt und an das vom justierten Verformungsmodell abgeleitete Rechenmodell weitergeleitet. Dieser Mess- und Berechnungszyklus kann natürlich auch während der Werkstückbearbeitung, z. B. nach einem temporären Programmstopp des Bearbeitungsprogramms, durchgeführt werden. Dies kann notwendig werden, da sich bei der Werkstückbearbeitung aufgrund des abtragenden spanenden Bearbeitungsverfahrens - Fräsen, Bohren und Drehen - das Werkstückgewicht und somit auch der Werkstückschwerpunkt verändern kann.

Als Grundlage für diesen Mess- und Berechnungszyklus dient eine Referenzmessung der Motorhaltemomente um die Schwenkachse 3 (A-Achse) und um die Drehachse 4 (C-Achse) in mindestens zwei definierten Schwenkpositionen der A-Achse und in mindestens einer definierten Drehposition der C-Achse mit der Aufnahme des dazugehörigen Haltestromwerts, der zum Halten der Lageposition von der A- und C-Achse gegenüber der Schwerkraftwirkung notwendig ist. Diese Referenzmessung wird bei der Erstinbetriebnahme des Werkstücktisches 12 in unbeladenem Zustand einmalig durchgeführt, so dass dieser kalibrierte Haltestromwert der Schwenkachse 3 (A-Achse) und der Drehachse 4 (C-Achse) für alle Werkstücktische 12 mit identisch gleichen geometrischen Abmessungen und mit identisch gleichen geometrischen Anbindungen an das Maschinenbett 10 Gültigkeit besitzen. In vorteilhafter Weise werden dabei die zwei Messläufe an jeweils zwei schwerkraftbelasteten Winkelpositionen der Schwenkachse 3 (A-Achse) durchgeführt und zwar einmal in der waagrechten Schwenkposition des Werkstücktisches 12 (A-Achse 0°) und einmal in der senkrechten Schwenkposition der A-Ache (A-Achse 90°). Die C-Achse befindet sich bei beiden Messläufen dabei in der definierten 0°-Position. Im vorliegenden Ausführungsbeispiel nach Figur 1 muss aufgrund der exzentrischen Lageranbindung des schwenk- und drehbaren Werkstücktisches 12 (A-Achslagerung) an das Maschinenbett 10 des Bearbeitungszentrums 1 der elektrische Servomotor 5 für die Schwenkachse 3 (A-Achs) auch in der waagrechten 0°-Position der A-Achse ein Haltemoment bzw. einen Haltestrom aufbringen, das heißt bei einem Bearbeitungszentrum nach Figur 1 ist die A-Achse in 0°-Position genauso wie in der 90°-Position schwerkraftbelastet. Das erfindungsgemäße Verfahren ist aber ausdrücklich nicht auf diese Ausführungsform nach Figur 1 beschränkt. Auch bei einer A-Achse in 0°-Position, die nicht schwerkraftbelastet ist, funktioniert das erfindungsgemäße Verfahren. In so einem Fall wäre das Haltemoment und somit der Haltestrom in der waagrechten 0°-Position einfach Null. Das gleiche gilt natürlich auch sinngemäß für die C-Achse.

Unter Zugrundelegung der über die Referenzmessung ermittelten Referenzhalteströme und der daraus berechneten Referenzhaltemomente läuft der Mess- und Berechnungszyklus für die Ermittlung der Werkstückmasse und des Werkstückschwerpunkts des zu bearbeitenden Werkstückes 14 ab. Dabei werden die gemessenen Halteströme mit den Referenzhalteströmen bzw. mit den Referenzhaltemomenten in eine formelmäßige Verbindung gebracht, um dann daraus die Werkstückmasse und den Werkstückschwerpunkt des zu bearbeitenden Werkstücks zu ermitteln und diese Werkstückkennwerte dann in das vom justierten Verformungsmodell abgeleitete Rechenmodell weiter zu leiten.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Bearbeitungszentrum
- 2: Werkstücktragende Baugruppe
- 3: Horizontale Schwenkachse (A-Achse)
- 4: Drehachse (C-Achse)
- 5: Elektrischer Servomotor
- 6: Vertikale Hochachse (Z-Achse)
- 7: Horizontale Längsachse (Y-Achse)
- 8: Horizontale Querachse (X-Achse)
- 9: Werkzeugtragende Baugruppe mit Werkzeugspindel
- 10: Maschinenbett
- 11: Maschinensteuerung
- 12: Drehbarer Werkstücktisch
- 13: Schwenkbarer Brückenträger
- 14: Werkstück
- 15: Winkelgemäße Abweichung (geometrische Verlagerung) um eine zur horizontalen Schwenkachse (A-Achse) parallelen Achse
- 16: Lineare Abweichung (geometrische Verlagerung) in der vertikalen Hochachse (Z-Achse)
- 17: Lineare Abweichung (geometrische Verlagerung) in der horizontalen Längsachse (Y-Achse)
- 20: Eichwerkstück (Eichgewichte)
- 21, 21': Kalibriertes Endmaß
- 22: Antastfläche

## Patentansprüche

1. Verfahren zur Einjustierung einer werkstücktragenden Baugruppe eines Bearbeitungszentrums für die spanende Werkstückbearbeitung, insbesondere ein multifunktionales Bearbeitungszentrum (1) für die spanende Fräs-Bohr und/oder Drehbearbeitung, wobei ein über mehrere variierende steifigkeitsrelevante Eingangsgrößen justierbares Verformungsmodell, das ein verformungsfähiges geometrisches System ist, welches die physikalischen Gegebenheiten und das komplette Verformungsverhalten der werkstücktragenden Baugruppe (2) des Bearbeitungszentrums (1) mit genügend großer Genauigkeit vollständig beschreibt, auf Basis von Verformungsmessungen justiert wird und dann in der Maschinensteuerung (11) des Bearbeitungszentrums (1) als nicht veränderbares Rechenmodell fest implementiert wird, das ein mathematisches System ist, welches das Verhalten des Verformungsmodells gegenüber dem theoretischen Verhalten des idealen nicht verformten Bauteils beschreibt, wobei mit dem implementierten Rechenmodell eine oder mehrere Positionskorrekturwerte für die Maschinensteuerung (11) des Bearbeitungszentrums (1) berechnet werden, mit denen dann die Maschinensteuerung (11) eine entsprechende Positionskorrektur von den berechneten elastischen Bauteilverformungen an der werkstücktragenden Baugruppe (2) automatisch durchführt, so dass die elastische Verformung der werkstücktragenden Baugruppe (2) in beliebiger Raumrichtung ohne Zuhilfenahme einer externen Messeinrichtung nur über die Maschinensteuerung (11) ermittelt und auch einjustiert wird, wobei das Verformungsmodell bei der Erstinbetriebnahme der werkstücktragenden Baugruppe (2) als Basis von Verformungsmessungen lediglich einmalig justiert wird, so dass das Verformungsmodell für alle werkstücktragenden Baugruppen (2) mit identisch gleichen geometrischen Abmessungen und mit identisch gleichen geometrischen Anbindungen an das Maschinenbett (10) Gültigkeit besitzt,
**dadurch gekennzeichnet, dass**
das Bearbeitungszentrum (1) drei lineare Maschinenachsen (6,7,8) und zwei rotative Maschinenachsen (3,4) umfasst,
das Rechenmodell bezogen auf den jeweiligen Schwenk- und Drehwinkel der werkstücktragenden Baugruppe (2) auf analytische oder numerische Weise einen Zusammenhang zwischen Werkstückmasse, Werkstückschwerpunkt und elastischer Bauteilverformung herstellt, und
die Positionskorrekturwerte mit dem implementierten Rechenmodell in Verbindung mit den in die Maschinensteuerung (11) übertragenen Parametern für die Werkstückmasse und für den Werkstückschwerpunkt des beladenen Werkstücks eine oder mehrere Positionskorrekturwerte für die Maschinensteuerung des Bearbeitungszentrums (1) berechnet werden,
wobei die werkstücktragende Baugruppe (2) als schwenk- und drehbarer Werkstücktisch mit horizontal ausgerichteter Schwenkachse (3) und mit einer normal zur Schwenkachse ausgerichteten Drehachse (4) ausgebildet ist, und
wobei der Werkstücktisch über die Maschinensteuerung (11) des Bearbeitungszentrums (1) simultan um die Schwenk- und Drehachse über elektrische Servomotoren gesteuert verstellbar ist.

2. Verfahren nach Anspruch 1, **dadurch gekennzeichnet, dass** eine Positionskorrektur während der Bearbeitung durchgeführt werden kann.

3. Verfahren nach Anspruch 1 oder 2, **dadurch gekennzeichnet, dass** die variierenden steifigkeitsrelevanten Eingangsgrößen des Verformungsmodells mit Hilfe von geeichten Werkstücken über einen Eichzyklus ermittelt werden, bei dem die unterschiedlichen geometrischen Verlagerungen von vordefinierten Messpunkten an der werkstücktragenden Baugruppe (2) unter unterschiedlichen Schwenkwinkeln bei geeichter Werkstückbeladung messtechnisch erfasst werden, um dann in steifigkeitsrelevante Eingangsgrößen umgerechnet werden zu können, die dann als Grundlage für die Einstellung des Verformungsmodells dienen und einen analytischen oder numerischen Zusammenhang zwischen Werkstückmasse, Werkstückschwerpunkt und elastischer Bauteilverformung ermöglichen.

4. Verfahren nach Anspruch 1 oder 2, **dadurch gekennzeichnet, dass** die Werkstückmasse und der Werkstückschwerpunkt des beladenen Werkstücks (14) über einen in der Maschinensteuerung implementierten und automatisch ablaufenden Mess- und Berechnungszyklus vor oder während des Bearbeitungsprozesses erfasst werden und dann als Werkstückparameter in das Rechenmodell weitergeleitet werden.

5. Verfahren nach Anspruch 4, **dadurch gekennzeichnet, dass** der Messzyklus für die Bestimmung der Werkstückmasse und des Werkstückschwerpunkts den Motorstrom des Servomotors (5) für die Schwenk- und/oder die Drehachse bei beladender werkstücktragender Baugruppe (2) in verschiedenen schwerkraftbelasteten Schwenkhaltepositionen erfasst, insbesondere vor Bearbeitungsbeginn einer Fräs- und Bohrbearbeitung.

6. Verfahren nach Anspruch 5, **dadurch gekennzeichnet, dass** der Motorstrom in mindestens drei verschiedenen schwerkraftbelasteten Schwenkhaltepositionen ermittelt wird.

7. Verfahren nach Anspruch 6, **dadurch gekennzeichnet, dass** die mindestens drei verschiedenen schwerkraftbelasteten Schwenkhaltepositionen genau definierte und fest eingestellte Schwenk- und Drehwinkel der werkstücktragenden Baugruppe (2) beinhalten.

8. Verfahren nach einem der Ansprüche 4 bis 7, **dadurch gekennzeichnet, dass** über die gemessenen Stromwerte mit Hilfe eines Berechnungszyklus ein numerischer Zusammenhang zwischen Motorstrom, Werkstückmasse und Werkstückschwerpunkt hergestellt wird.

9. Verfahren nach Anspruch 8, **dadurch gekennzeichnet, dass** der Berechnungszyklus aus einem Berechnungsalgorithmus besteht, der über linear unabhängige Gleichungen die unbekannten Größen Werkstückmasse und Werkstückschwerpunkt über die gemessenen Motorströme ermitteln kann.

10. Verfahren nach Anspruch 1 oder 2, **dadurch gekennzeichnet, dass** als Grundlage für das Verformungsmodell ein 3D-FEM-(Finite-Elemente-Methode)-Modell der werkstücktragenden Baugruppe (2) dient.

11. Verfahren nach Anspruch 10, **dadurch gekennzeichnet, dass** mit Verwendung einer FEM-(Finite-Elemente-Methode)-Analyse die Abhängigkeiten zwischen Werkstücklage, Werkstückgewicht und Werkstückschwerpunkt numerisch über das Verformungsmodell dargestellt werden kann, um dann daraus mit Hilfe des in der Maschinensteuerung implementierten Rechenmodells die tatsächlich auftretende elastische Verformung zu berechnen, die dann an die Maschinensteuerung (11) als Korrekturwert ausgegeben werden kann.

12. Verfahren nach Anspruch 11, **dadurch gekennzeichnet, dass** das Rechenmodell den Korrekturwert entsprechend der Schwenk- und Drehwinkelposition der werkstücktragenden Baugruppe (2) stetig an die veränderten Belastungsverhältnisse anpassen kann.

## Claims

1. A method for adjusting a workpiece-supporting assembly of a machining centre for workpiece machining, in particular a multi-functional machining centre (1) for milling, drilling and/or turning machining,
wherein a deformation model adjustable via several varying stiffness-relevant input variables, which is a deformable geometrical system, which completely describes the physical conditions and the complete deformation behaviour of the workpiece-supporting assembly (2) of the machining centre (1) with sufficiently high accuracy, is adjusted on the basis of deformation measurements and is then fixedly implemented in the machine control (11) of the machining centre (1) as a not modifiable calculation model, which is a mathematical system, which describes the behaviour of the deformation model compared to the theoretical behaviour of the ideal, not deformed component,
wherein, with the implemented calculation model, one or more position correction values for the machine control (11) of the machining centre (1) are calculated, using which the machine control (11) then automatically performs a respective position correction of the calculated elastic component deformations on the workpiece-supporting assembly (2), so that the elastic deformation of the workpiece-supporting assembly (2) is determined and also adjusted in any spatial direction without the aid of an external measuring device via the machine control (11) only,
wherein the deformation model, upon initial commissioning of the workpiece-supporting assembly (2), is only adjusted once as the basis of deformation measurements, so that the deformation model is valid for all workpiece-supporting assemblies (2) with identically equal geometrical dimensions and with identically equal geometrical connections to the machine bed (10),
**characterised in that**
the machining centre (1) comprises three linear machine axes (6, 7, 8) and two rotary machine axes (3, 4),
the calculation model, in relation to the respective pivot and rotation angles of the workpiece-supporting assembly (2), establishes a connection between the mass of the workpiece, the centre of gravity of the workpiece, and the elastic component deformation in an analytical or numerical manner, and
one or more position correction values for the machine control of the machining centre (1) are calculated with the implemented calculation model in connection with the parameters transferred into the machine control (11) for the mass of the workpiece and for the centre of gravity of the loaded workpiece,
wherein the workpiece-supporting assembly (2) is designed as a pivotable and rotatable workpiece table with a horizontally oriented pivot axis (3) and with a rotation axis (4) oriented normal to the pivot axis, and
wherein the workpiece table is adjustable via the machine control (11) of the machining centre (1) simultaneously around the pivot and rotation axes, controlled via electrical servomotors.

2. The method according to claim 1, **characterised in that** a position correction can be performed during machining.

3. The method according to claim 1 or 2, **characterised in that** the varying stiffness-relevant input variables of the deformation model are determined using calibrated workpieces via a calibration cycle, in which the different geometrical displacements from pre-defined measuring points at the workpiece-supporting assembly (2) are recorded with measurements at different pivot angles with a calibrated workpiece load, to then be convertible into stiffness-relevant input variables, which then serve as the basis for setting the deformation model and enable an analytical or numerical connection between the mass of the workpiece, the centre of gravity of the workpiece, and the elastic component deformation.

4. The method according to claim 1 or 2, **characterised in that** the mass of the workpiece and the centre of gravity of the loaded workpiece (14) are recorded via a measurement and calculation cycle, implemented into the machine control and running automatically, before or during the machining process and are then passed on into the calculation model as workpiece parameters.

5. The method according to claim 4, **characterised in that** the measurement cycle for determining the mass of the workpiece and the centre of gravity of the workpiece records the motor current of the servomotor (5) for the pivot and/or the rotation axis with a loaded workpiece-supporting assembly (2) at various gravity-loaded pivot holding positions, in particular prior to the start of milling and drilling machining.

6. The method according to claim 5, **characterised in that** the motor current is determined in at least three different gravity-loaded pivot holding positions.

7. The method according to claim 6, **characterised in that** the at least three different gravity-loaded pivot holding positions include exactly defined and fixedly set pivot and rotation angles of the workpiece-supporting assembly (2).

8. The method according to any one of claims 4 to 7, **characterised in that**, via the measured current values, a numerical connection between motor current, mass of the workpiece, and centre of gravity of the workpiece is established using a calculation cycle.

9. The method according to claim 8, **characterised in that** the calculation cycle consists of a calculation algorithm, which, via linearly independent equations, can determine the unknown variables of mass of the workpiece and centre of gravity of the workpiece via the measured motor currents.

10. The method according to claim 1 or 2, **characterised in that** a 3D FEM (finite-elements method) model of the workpiece-supporting assembly (2) serves as the basis for the deformation model.

11. The method according to claim 10, **characterised in that**, using an FEM (finite-elements method) analysis, the dependencies between position of the workpiece, weight of the workpiece, and centre of gravity of the workpiece can be numerically represented via the deformation model, in order to then, using the calculation model implemented in the machine control, calculate the actually occurring elastic deformation therefrom, which then can be output to the machine control (11) as a correction value.

12. The method according to claim 11, **characterised in that** the calculation model can constantly adjust the correction value to the altered load conditions according to the position of the pivot and rotation angles of the workpiece-supporting assembly (2).

## Revendications

1. Procédé d'ajustage d'un module porteur d'une pièce à usiner d'un centre de traitement pour le traitement de la pièce à usiner sous tension, en particulier un centre de traitement multifonctionnel (1) pour le fraisage-perçage et/ou le tournage sous tension,
dans lequel un modèle de déformation pouvant être ajusté par plusieurs grandeurs d'entrées variables, pertinentes pour la rigidité, qui est un système géométrique capable de déformation, qui décrit complètement les conditions physiques et le comportement de déformation complet du module porteur de pièce à usiner (2) du centre de traitement (1) avec une précision suffisamment grande, est ajusté sur la base de mesures de déformation et ensuite, est mis en oeuvre dans la commande de machine (11) du centre de traitement (1) en tant que modèle de calcul non modifiable, qui est un système mathématique qui décrit le comportement du modèle de déformation par rapport au comportement théorique de l'élément idéal non déformé,
dans lequel avec le modèle de calcul mis en oeuvre, une ou plusieurs valeurs de correction de position pour la commande de machine (11) du centre de traitement (1) sont calculées, avec lesquelles ensuite la commande de machine (11) effectue automatiquement une correction de position correspondante des déformations d'élément élastiques calculées sur le module porteur de pièce à usiner (2), de sorte que la déformation élastique du module porteur de pièce à usiner (2) est déterminée et est également ajustée dans une direction spatiale quelconque sans l'aide d'un dispositif de mesure externe uniquement par la commande de machine (11), dans lequel le modèle de déformation est ajusté seulement une fois lors de la première mise en service du module porteur de pièce à usiner (2) en tant que base de mesures de déformation, de sorte que le modèle de déformation soit valide pour tous les modules porteurs de pièce à usiner (2) ayant des dimensions géométriques identiques et des liaisons géométriques identiques sur le banc de la machine (10),
**caractérisé en ce que**
le centre de traitement (1) comprend trois axes de machine linéaires (6, 7, 8) et deux axes de machine rotatifs (3, 4),
le modèle de calcul produit, par rapport aux angles de pivotement et de rotation respectifs du module porteur de pièce à usiner (2) de façon analytique ou numérique, une corrélation entre masse de la pièce à usiner, centre de gravité de la pièce à usiner et déformation élastique de l'élément, et
les valeurs de correction de position sont calculées avec le modèle de calcul mis en oeuvre en relation avec les paramètres transmis dans la commande de machine (11) concernant la masse de pièce à usiner et le centre de gravité de la pièce à usiner chargée, une ou plusieurs valeurs de correction de position sont calculées pour la commande de machine du centre de traitement (1),
dans lequel le module porteur de pièce à usiner (2) est conçu comme une table de pièce à usiner pouvant pivoter et pouvant tourner avec des axes de pivotement orientés horizontalement (3) et avec un axe de rotation (4) normalement orienté vers l'axe de pivotement, et
dans lequel la table de pièce à usiner peut être réglée par la commande de machine (11) du centre de traitement (1) simultanément autour de l'axe de pivotement et de rotation, en étant commandée par des servomoteurs électriques.

2. Procédé selon la revendication 1, **caractérisé en ce qu'**une correction de position peut être réalisée pendant le traitement.

3. Procédé selon la revendication 1 ou 2, **caractérisé en ce que** les grandeurs d'entrée variables, pertinentes pour la rigidité, du modèle de déformation sont déterminées à l'aide de pièces à usiner étalonnées sur un cycle d'étalonnage, dans lequel les différents décalages géométriques de points de mesure prédéfinis sur le module porteur de pièce à usiner (2) sont captés par une technique de mesure sous différents angles de pivotement avec un chargement de pièce à usiner étalonné, pour pouvoir ensuite être convertis en grandeurs d'entrée pertinentes pour la rigidité, qui servent ensuite de base pour le réglage du modèle de déformation et permettent une corrélation analytique ou numérique entre masse de la pièce à usiner, point de gravité de la pièce à usiner et déformation élastique de l'élément.

4. Procédé selon la revendication 1 ou 2, **caractérisé en ce que** la masse de la pièce à usiner et le point de gravité de la pièce à usiner de la pièce à usiner chargée (14) sont captés sur un cycle de mesure et de calcul mis en oeuvre dans la commande de machine et se déroulant automatiquement avant ou pendant le processus de traitement et sont ensuite retransmis en tant que paramètres de pièce à usiner dans le modèle de calcul.

5. Procédé selon la revendication 4, **caractérisé en ce que** le cycle de mesure pour la détermination de la masse de la pièce à usiner et du point de gravité de la pièce à usiner capte le courant moteur du servomoteur (5) pour l'axe de pivotement et/ou de rotation avec un module porteur de pièce à usiner (2) chargé dans différentes positions d'arrêt de pivotement soumis à la force de gravité, en particulier avant le début du traitement d'un traitement par fraisage et perçage.

6. Procédé selon la revendication 5, **caractérisé en ce que** le courant moteur est déterminé dans au moins trois positions d'arrêt de pivotement différentes soumises à la force de gravité.

7. Procédé selon la revendication 6, **caractérisé en ce que** les au moins trois positions d'arrêt de pivotement différentes soumises à la force de gravité comportent des angles de pivotement et de rotation définis exactement et fixés du module porteur de pièce à usiner (2).

8. Procédé selon l'une des revendications 4 à 7, **caractérisé en ce que** par les valeurs de courant mesurées à l'aide d'un cycle de calcul, une corrélation numérique entre courant moteur, masse de la pièce à usiner et point de gravité de la pièce à usiner est produite.

9. Procédé selon la revendication 8, **caractérisé en ce que** le cycle de calcul consiste en un algorithme de calcul qui peut déterminer par des équations linéaires indépendantes, les grandeurs inconnues de masse de pièce à usiner et de point de gravité de la pièce à usiner sur les courants moteurs mesurés.

10. Procédé selon la revendication 1 ou 2, **caractérisé en ce qu'**un modèle 3D-FEM (méthode des éléments finis) du module porteur de pièce à usiner (2) sert de base pour le modèle de déformation.

11. Procédé selon la revendication 10, **caractérisé en ce qu'**avec l'utilisation d'une analyse FEM (méthode des éléments finis), les interdépendances entre la position de la pièce à usiner, le poids de la pièce à usiner et le point de gravité de la pièce à usiner peuvent être représentées numériquement sur le modèle de déformation pour calculer ensuite à partir de celles-ci à l'aide du modèle de calcul mis en oeuvre dans la commande de machine, la déformation élastique effective qui peut ensuite être délivrée à la commande de machine (11) en tant que valeur de correction.

12. Procédé selon la revendication 11, **caractérisé en ce que** le modèle de calcul peut adapter constamment la valeur de correction conformément à la position d'angle de pivotement et de rotation du module porteur de pièce à usiner (2) aux rapports de contrainte modifiés.
